# EUROPEAN PATENT SPECIFICATION

(11) **EP 4 385 818 B1**
(45) Date of publication and mention of the grant of the patent: **04.12.2024**
(21) Application number: 23213417.1
(22) Date of filing: 30.11.2023
(51) Int. Cl.: B60P 3/10, B63C 3/12, B63H 21/22, B63H 25/04, G05D 1/661

(54) **TRAILERING SUPPORT DEVICE AND METHOD, AND MARINE VESSEL INCLUDING TRAILERING SUPPORT DEVICE**
ANHÄNGERUNTERSTÜTZUNGSVORRICHTUNG UND -VERFAHREN SOWIE WASSERFAHRZEUG MIT ANHÄNGERUNTERSTÜTZUNGSVORRICHTUNG
DISPOSITIF ET PROCÉDÉ DE SUPPORT DE REMORQUE, ET NAVIRE COMPRENANT UN DISPOSITIF DE SUPPORT DE REMORQUE

(30) Priority: 16.12.2022 JP 2022201312
(43) Date of publication of application: 19.06.2024
(73) Proprietor: Yamaha Hatsudoki Kabushiki Kaisha, Iwata-shi, Shizuoka 438-8501 (JP)
(72) Inventor: Inoue, Hiroshi, Iwata-shi, Shizuoka, 438-8501 (JP)
(74) Representative: Grünecker Patent- und Rechtsanwälte PartG mbB

(56) References cited:
- US-A1- 2019 300 138
- US-A1- 2019 361 457
- US-A1- 2022 371 503

## Description

The present invention relates to a trailering support device and method, and a marine vessel including the trailering support device.

Conventionally, a trailering in which a hull is loaded onto a trailer has been performed mainly to land a small hull. International Publication WO 2016/163559 discloses a technique for acquiring positions of a hull and a trailer and controlling a propulsion device or the like to automatically load (mount) the hull onto the trailer. Other trailering support devices are known as well from US 2019/300138 A1, US 2019/361457 A1 and US 2022/371503 A1.

However, in some cases, while automatic loading control is executed, the hull does not move as predicted by the control due to disturbance such as wind, tidal current, or waves acting on the hull, and the hull may not be smoothly loaded onto the trailer. Especially, an inexperienced vessel operator is not able to accurately determine whether or not the loading of the hull onto the trailer is performable until the hull got considerably close to the trailer.

The present invention provides a trailering support device and method capable of facilitating loading of a hull onto a trailer, and a marine vessel including the trailering support device.

According to a preferred embodiment of the present invention, a trailering support device that performs trailering for loading a hull onto a trailer, the trailering support device comprising one or more controllers configured to function as a vessel steering controller configured to perform automatic vessel steering control so as to move the hull toward the trailer, an estimation unit configured to estimate, based on a content of the automatic vessel steering control, a position of the hull at a predetermined timing after start of the automatic vessel steering control and an azimuth of the hull at the predetermined timing, a detector configured to detect the position of the hull, a steering angle of the hull, and the azimuth of the hull, a determination unit configured to respectively compare the position and the azimuth which are estimated by the estimation unit with the position and the azimuth which are detected by the detector at the predetermined timing, and to determine, based on a comparison result, whether the loading of the hull onto the trailer is performable or not performable, and a notifier configured to notify, in a case where the determination unit determines that the loading of the hull onto the trailer is not performable, of an effect that the loading of the hull onto the trailer is not performable.

According to this configuration, automatic vessel steering control is performed so as to move a hull toward a trailer for loading the hull to the trailer, the position and the azimuth of the hull at a predetermined timing after the start of the automatic vessel steering control are estimated based on the content of the automatic vessel steering control, and the position, the steering angle and the azimuth of the hull are detected. Thereafter, it is determined whether or not the hull can be loaded onto the trailer based on a comparison result between the estimated position and the estimated azimuth and the position and the azimuth detected at the predetermined timing respectively, and in a case where it is determined that the hull cannot be loaded onto the trailer, the effect that the hull cannot be loaded onto the trailer is notified.

The above and other elements, features, steps, characteristics and advantages of the present invention will become more apparent from the following detailed description of the preferred embodiments with reference to the attached drawings.

### BRIEF DESCRIPTION OF THE DRAWINGS

FIG. 1 is a side view illustrating an example of a trailering system to which a trailering support device is applied.
FIG. 2 is a top view illustrating an example of the trailering system.
FIG. 3 is a block diagram of the trailering system.
FIG. 4 is a diagram illustrating a functional block for implementing the trailering support device.
FIG. 5 is a diagram illustrating an example of a state display screen showing a transition of a state during execution of an automatic trailer mode.
FIG. 6 is a flowchart illustrating automatic vessel steering control processing.

### DESCRIPTION OF THE EMBODIMENTS

Hereinafter, preferred embodiments of the present invention will be described with reference to the drawings.

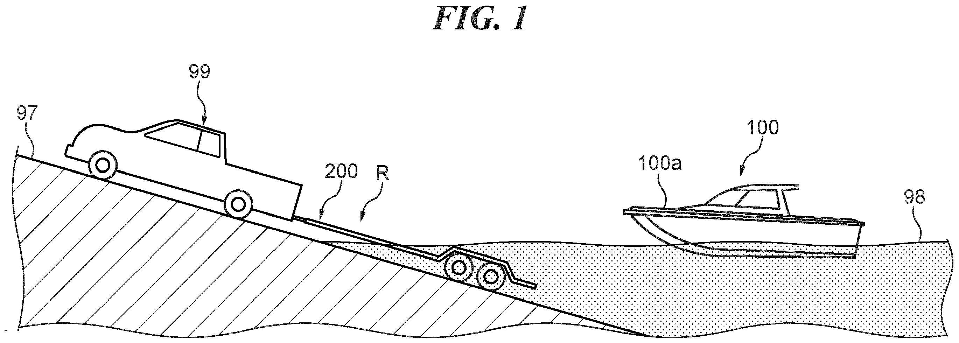

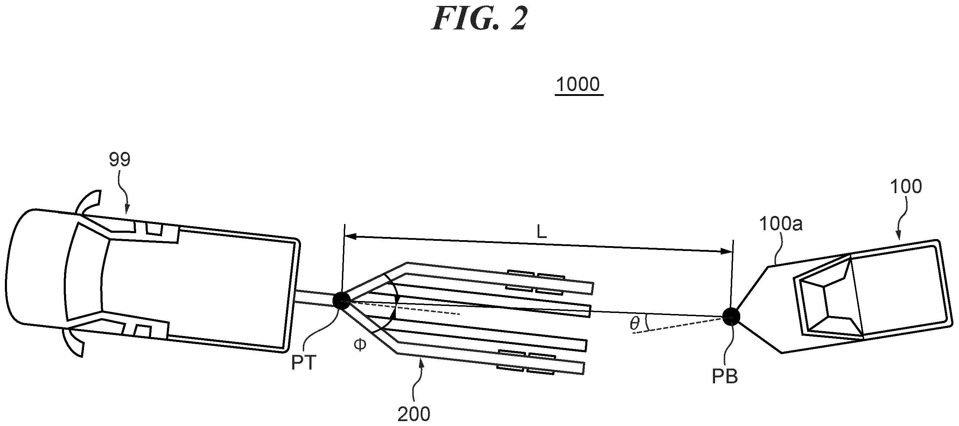

FIG. 1 is a side view illustrating an example of a trailering system 1000 to which a trailering support device according to a preferred embodiment of the present invention is applied. FIG. 2 is a top view illustrating an example of the trailering system 1000. The trailering system 1000 includes a marine vessel 100 and a trailer 200 on which the marine vessel 100 can be placed. The trailer 200 is a trailer for a marine vessel towed by a vehicle 99 operated by a driver. The marine vessel 100 is, for example, a so-called jet boat.

The trailering system 1000 is a system capable of detaching the marine vessel 100 from the trailer 200 and attaching the marine vessel to the trailer 200. An inclined portion (ramp) R inclined downwards toward the bottom of water is formed on the water side. When moving the marine vessel 100 from the trailer 200 on a land 97 to a water surface 98 (when the marine vessel 100 leaves the trailer 200), a driver drives the vehicle 99 to move the trailer 200 to the inclined portion R, as illustrated in FIG. 1. Here, when an automatic separation mode is started (when a vessel steering mode is switched to the automatic separation mode), the marine vessel 100 is automatically steered, and the marine vessel 100 automatically moves in a direction away from the trailer 200. As a result, the marine vessel 100 is automatically separated from the trailer 200. It is noted that it is not essential that the marine vessel 100 is automatically separated from the trailer 200.

When moving the marine vessel 100 from the water surface 98 to the trailer 200 on the land 97 (when the marine vessel 100 is attached to the trailer 200), the driver first moves the trailer 200 to the inclined portion R. Here, when an automatic trailer mode is started (when the vessel steering mode is switched to the automatic trailer mode), the marine vessel 100 is automatically steered, and the marine vessel 100 automatically moves in a direction toward the trailer 200. As a result, the marine vessel 100 is automatically mounted on the trailer 200. As a method of allowing the marine vessel 100 to be automatically separated from and automatically mounted on the trailer 200, a known method disclosed in International Publication WO 2016/163559 or the like may be adopted.

It is noted that it is efficient to allow the marine vessel 100 to be automatically separated from or mounted on the trailer 200 (especially mounted on the trailer 200) as described above after a controller 101 specifies "relative position information" between the marine vessel 100 and the trailer 200. The "relative position information" is defined as a quantity as viewed from above as illustrated in FIG. 2, and includes a distance L, a vessel azimuth ϕ, and a trailer azimuth θ. Reference positions in defining the relative position information include a reference position PT in the trailer 200 and a reference position PB in the marine vessel 100, as illustrated in FIG. 2. The reference position PT and the reference position PB may be respectively any portion of the trailer 200 and the marine vessel 100.

The distance L is a distance between the trailer 200 and the marine vessel 100. That is, the distance L is a linear distance between the reference position PT and the reference position PB. The vessel azimuth ϕ is a relative azimuth (direction) of the marine vessel 100 as viewed from the trailer 200. The trailer azimuth θ is a relative azimuth (direction) of the trailer 200 as viewed from the marine vessel 100.

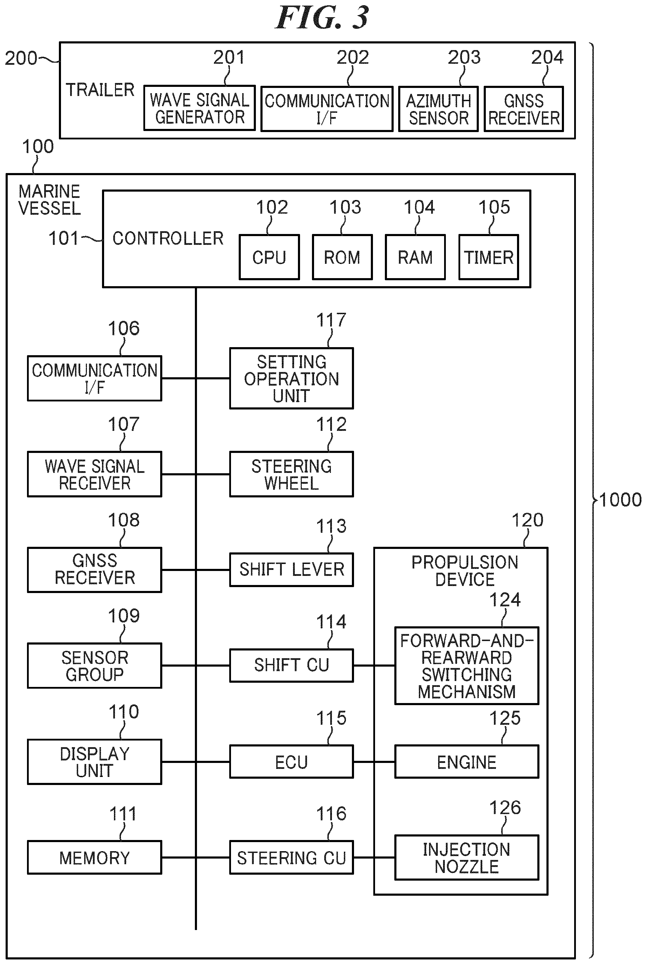

FIG. 3 is a block diagram of the trailering system 1000. The marine vessel 100 includes the hull 100a (refer to FIGS. 1 and 2) and a propulsion device 120 provided on the hull 100a. The marine vessel 100 obtains a propulsive force by ejecting a jet by the propulsion device 120.

The propulsion device 120 includes an engine 125 for generating a driving force, a forward-and-rearward switching mechanism 124 for transmitting the driving force of the engine 125 in an adjusted state, and an injection nozzle 126 for ejecting a jet. The propulsion device 120 includes a propeller (not illustrated) to which the driving force of the engine 125 is transmitted via the forward-and-rearward switching mechanism 124. The propulsion device 120 generates a jet from the injection nozzle 126 by rotating the propeller by the driving force. In addition, the propulsion device 120 adjusts the traveling direction of the marine vessel 100 by changing the ejection direction of the jet from the injection nozzle 126 generated by the rotation of the propeller.

The marine vessel 100 further includes a controller 101, an engine control unit (ECU) 115, a shift control unit (CU) 114, and a steering CU 116. The controller 101 entirely controls the marine vessel 100 including the propulsion device 120. The controller 101 includes a CPU 102, a ROM 103, a RAM 104, and a timer 105. The ROM 103 stores a control program. The CPU 102 implements various types of control processing by loading the control program stored in the ROM 103 to the RAM 104 and executing the control program. The RAM 104 provides a work area when the CPU 102 executes the control program.

The ECU 115, the shift CU 114, and the steering CU 116 control the engine 125, the forward-and-rearward switching mechanism 124, and the injection nozzle 126, respectively, based on an instruction from the controller 101.

The marine vessel 100 further includes a sensor group 109. The sensor group 109 includes a tide sensor, a wind speed sensor, a wind direction sensor, an azimuth sensor, a steering angle sensor, a hook sensor, a water landing sensor, an acceleration sensor, a speed sensor, and an angular speed sensor (all not illustrated). The tide sensor detects a tide. The wind speed sensor detects a wind speed. The wind direction sensor detects a wind direction. The azimuth sensor detects an absolute azimuth of the hull 100a. The steering angle sensor detects a steering angle of hull 100a by detecting a rotation angle of a steering wheel 112.

The hook sensor detects that the hook of the trailer 200 is hooked on the hull 100a. The water landing sensor detects that the injection nozzle 126 of the propulsion device 120 is located in the water. The acceleration sensor detects the posture of the hull 100a by detecting the inclination of the hull 100a in addition to detecting the acceleration of the hull 100a. The speed sensor detects the speed of the hull 100a, and the angular speed sensor detects the angular speed of the hull 100a. It is noted that it is not essential for the sensor group 109 to include all these sensors.

The steering wheel 112 and a shift lever 113 are provided on the hull 100a of the marine vessel 100. The controller 101 controls the ejection direction of the jet ejected from the injection nozzle 126, via the steering CU 116, based on the rotation angle of the operated steering wheel 112. In addition, the controller 101 performs control to change a shift position in the forward-and-rearward switching mechanism 124, via the shift CU 114, based on the position of the operated shift lever 113.

The marine vessel 100 further includes a memory 111, a display unit 110, a setting operation unit 117, a communication I/F 106, a wave signal receiver 107, and a GNSS receiver 108. The memory 111 is a nonvolatile storage medium. The display unit 110 includes a display, and displays various types of information based on an instruction from the controller 101. The display unit 110 may have a function of generating sound. The setting operation unit 117 includes an operator for performing an operation related to vessel steering, a setting operator for performing various settings, and an input operator for inputting various instructions (all not illustrated).

The communication I/F 106 is capable of communicating with an external device in a wireless and/or wired manner. The GNSS receiver 108 periodically receives a global navigation satellite systems (GNSS) signal from a GNSS satellite. A signal (described later) received by the wave signal receiver 107 and a signal received by the GNSS receiver 108 are supplied to the controller 101.

The trailer 200 includes a wave signal generator 201, a communication I/F 202, an azimuth sensor 203, and a GNSS receiver 204. The communication I/F 202 is capable of communicating with an external device in a wireless and/or wired manner. The communication I/F 202 is further capable of communicating with the communication I/F 106 by near field communication or the like. It is noted that a communication method between the marine vessel 100 and the trailer 200 is not limited. The GNSS receiver 204 periodically receives a GNSS signal from a GNSS satellite. The azimuth sensor 203 detects an absolute azimuth of the trailer 200.

The GNSS signal received by the GNSS receiver 204 is transmitted by the communication I/F 202 as a signal indicating a current position (an absolute position) of the trailer 200, and is received by the communication I/F 106 of the marine vessel 100. In addition, a signal indicating the azimuth (the absolute position) of the trailer 200 detected by the azimuth sensor 203 is also transmitted by the communication I/F 202 and received by the communication I/F 106 of the marine vessel 100.

Although it is not essential to provide the wave signal generator 201 and the wave signal receiver 107, these units will be described later.

The controller 101 serving as a vessel steering controller 401 performs automatic vessel steering control so as to move the hull 100a toward the trailer 200 in the automatic trailer mode. During the execution of the automatic vessel steering control, the hull 100a may not move as predicted by the control due to disturbance such as wind, tidal current, or waves acting on the hull 100a, and the hull 100a may not be smoothly loaded onto the trailer 200. Especially, an inexperienced vessel operator is not able to accurately determine whether or not the loading of the hull 100a onto the trailer 200 is performable until the hull 100a got considerably close to the trailer 200. Therefore, in the present preferred embodiment, in a case where it is determined that the hull 100a cannot be loaded onto the trailer 200 in the automatic trailer mode (the automatic vessel steering control), the effect that the hull 100a cannot be loaded onto the trailer 200 is notified, thereby making it possible to facilitate loading of the hull 100a onto the trailer 200.

When executing the automatic trailer mode, the controller 101 specifies a trailer (hereinafter, referred to as a "target trailer") on which the hull 100a is to be loaded. As a method for specifying the target trailer, a known method may be adopted. As an example of this method, for example, in a case where there are a plurality of trailers that transmit position information, the controller 101 acquires the current position of each trailer through wireless communication. Then, the controller 101 displays the acquired current positions of trailers on the screen of the display unit 110. The controller 101 specifies, on the display screen, the target trailer by receiving designation of a desired position among the positions of the respective trailers from a user.

Alternatively, one of the trailers for which near field communication established may be specified as the target trailer. In this case, the controller 101 may receive information on the current position of the target trailer by wireless communication.

Alternatively, a method disclosed in Japanese Patent Application No. 2021-122618 or Japanese Patent Application No. 2021-116970 may be adopted, the marine vessel 100 may receive a laser beam or a wave signal emitted from a certain trailer, whereby the certain trailer may be specified as the target trailer. For example, the wave signal generator 201 provided in the trailer 200 emits a wave signal from at least three different positions whose "relative positional relationship" with each other is known. As an example, the wave signal is an optical signal, the wave signal generator 201 is three LEDs, and the wave signal receiver 107 is a camera.

The relative position information may be specified based on the wave signal emitted from each position and received by the wave signal receiver 107 provided in the marine vessel 100. For example, the controller 101 can extract bright spots from an image obtained by the camera imaging the optical signals emitted from the three LEDs, and can acquire the relative position information (the trailer azimuth θ, the vessel azimuth ϕ, and the distance L) based on the positions of the bright spots in the image and the "relative positional relationship". It is noted that, in the case of adopting a method that does not use the relative position information for specifying the target trailer, it is not essential to specify the relative position information.

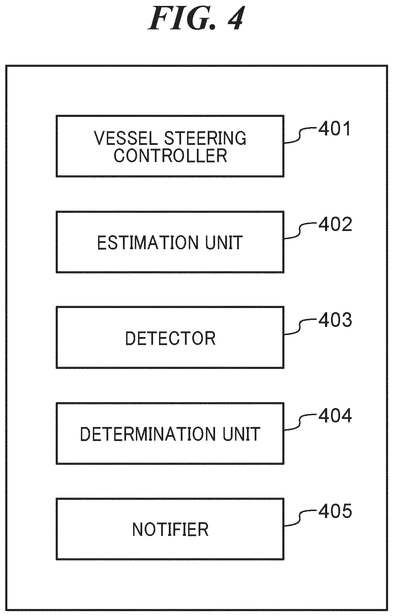

FIG. 4 is a diagram illustrating a functional block for implementing the trailering support device. This functional block includes, as functional units, the vessel steering controller 401, an estimation unit 402, a detector 403, a determination unit 404, and a notifier 405.

Each of these functional units is mainly implemented through cooperation between at least one of: the communication I/F 106; the GNSS receiver 108; the sensor group 109; the display unit 110; and the memory 111, and the controller 101.

The function of the vessel steering controller 401 is mainly implemented by the controller 101. The vessel steering controller 401 performs the automatic vessel steering control so as to cause the hull 100a to move toward the trailer 200.

The function of the estimation unit 402 is mainly implemented by the controller 101 and the memory 111. Based on the content of the automatic vessel steering control to be performed by the vessel steering controller 401, the estimation unit 402 performs estimation processing to estimate "the position and the azimuth of the hull 100a at a "comparison timing" which is a predetermined timing". The comparison timing repeatedly arrives (for example, periodically) after the start of the automatic vessel steering control. The content of the automatic vessel steering control includes at least one of control of the steering angle of the hull 100a and control of the output of the propulsion device 120. For example, the automatic vessel steering control may be implemented by controlling the steering angle, with the forward shift and constant output (idle rotation) of the propulsion device 120.

For example, the comparison timing is a timing at which a predetermined period of time T has elapsed since the last time the estimation unit 402 estimated the position and the azimuth of the hull 100a. Alternatively, the comparison timing may be a timing at which the hull 100a has moved by a first predetermined distance since the last time the estimation unit 402 estimated the position and the azimuth of the hull 100a. Alternatively, the comparison timing may be an earlier timing between the timing at which the predetermined period of time T has elapsed and the timing at which the hull 100a has moved by the first predetermined distance, since the last time the estimation unit 402 estimated the position and the azimuth of the hull 100a.

The function of the detector 403 is mainly implemented by the controller 101, the GNSS receiver 108, and the sensor group 109. The detector 403 detects the position, the steering angle, and the azimuth, of the hull 100a. Namely, the detector 403 acquires the current position (the absolute position) of the hull 100a from the GNSS signal received by the GNSS receiver 108. The detector 403 detects the current azimuth (the absolute azimuth) of the hull 100a by the azimuth sensor in the sensor group 109. Further, the detector 403 detects the steering angle of the hull 100a by the steering angle sensor in the sensor group 109.

The determination unit 404 is mainly implemented by the controller 101. The determination unit 404 compares the position and the azimuth of the hull 100a estimated by the estimation unit 402 with the position and the azimuth of the hull 100a detected at the comparison timing by the detector 403. Then, the determination unit 404 determines whether or not the hull 100a can be loaded onto the trailer 200 (that is, determines loadable/unloadable) based on the comparison result.

The function of the notifier 405 is mainly implemented by the controller 101 and the display unit 110. In a case where the determination unit 404 determines that the hull 100a cannot be loaded onto the trailer 200, the notifier 405 notifies of information indicating that the hull 100a cannot be loaded onto the trailer.

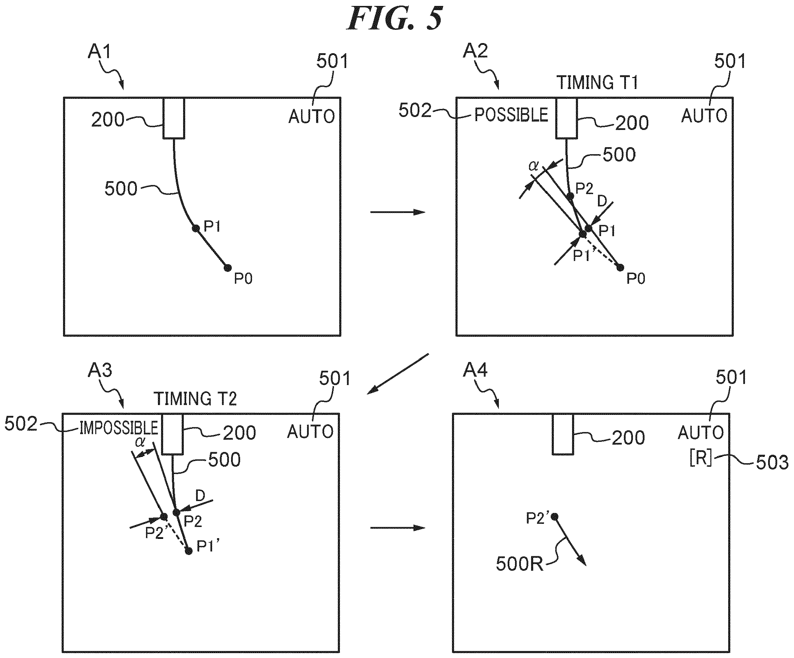

FIG. 5 is a diagram illustrating an example of a state display screen showing the transition of a state during execution of the automatic trailer mode. In FIG. 5, screens A1 to A4 are illustrated corresponding to the transition of the state. The screens A1 to A4 are displayed on the display unit 110 after the start of the automatic trailer mode is instructed and the target trailer is specified.

On the screen A1, a position P0 is a current position (an actually detected position) of the hull 100a at the start of the automatic trailer mode, which is an initial position. A predicted position P1 is an estimated position of the hull 100a after the lapse of the predetermined period of time T from the start of the automatic trailer mode. A predicted trajectory 500 is a predicted future movement trajectory of the hull 100a starting from the position P0. "AUTO" indicating that the automatic vessel steering control is being executed is displayed in a display area 501.

In the screens A1 to A4, the position of the target trailer 200, the predicted position of the hull 100a, the actually detected position of the hull 100a, the movement trajectory of the hull 100a, and the like are displayed. These display modes are not limited to the illustrated modes. Timings T1 and T2 to be described later both correspond to comparison timings.

The screen A2 shows a state after the predetermined period of time T has elapsed since the timing at which the screen A1 was displayed (referred to as the timing T1). An actually detected position P1' is the position of the hull 100a detected by the detector 403 at the timing T1. On the screen A2, a distance D is a difference (interval) at the timing T1 between the predicted position P1 and the actually detected position P1'. An angle difference α is a difference at the timing T1 between a predicted azimuth of the hull 100a (an azimuth estimated at the start of the automatic trailer mode) and an actually detected azimuth detected by the detector 403 at the timing T1. The predicted azimuth in the screen A2 is a straight line passing through the position P0 and the predicted position P1. The actually detected azimuth in the screen A2 is a straight line passing through the position P0 and the actually detected position P1'. The angle difference α in the screen A2 is an angle formed by the straight line representing the predicted azimuth and the straight line representing the actually detected azimuth in the screen A2.

Here, in a case where the distance D exceeds a second predetermined distance and/or the angle difference α exceeds a predetermined angle, the determination unit 404 determines that the hull 100a cannot be loaded onto the trailer 200. The determination unit 404 determines that the hull 100a can be loaded onto the trailer 200 in a case where the distance D does not exceed the second predetermined distance and the angle difference α does not exceed the predetermined angle. In the state shown in the screen A2, the distance D does not exceed the second predetermined distance and the angle difference α does not exceed the predetermined angle, and thus "possible" indicating that the hull 100a can be loaded onto the trailer 200 is displayed in the display area 502 in the screen A2.

At the timing T1, a predicted position P2 after the predetermined period of time T has elapsed (at the timing T2) from the timing T1 is predicted, a new predicted trajectory 500 starting from the actually detected position P1' is predicted (the predicted trajectory is updated), and the predicted position P2 and the new predicted trajectory 500 are displayed on the screen.

The screen A3 shows a state after the predetermined period of time T has elapsed (the timing T2) from the timing T1 at which the screen A2 is displayed. An actually detected position P2' is the position of the hull 100a detected by the detector 403 at the timing T2. On the screen A3, the distance D is a difference (interval) at the timing T2 between the predicted position P2 and the actually detected position P2'. The angle difference α is a difference at the timing T2 between the predicted azimuth of the hull 100a (the azimuth estimated at the timing T1) and the actually detected azimuth detected by the detector 403 at the timing T2. The predicted azimuth in the screen A3 is a straight line passing through the position P1' and the predicted position P2. The actually detected azimuth in the screen A3 is a straight line passing through the position P1' and the actually detected position P2'. The angle difference α in the screen A3 is an angle formed by the straight line representing the predicted azimuth and the straight line representing the actually detected azimuth on the screen A3. In the state shown in the screen A3, the distance D exceeds the second predetermined distance and/or the angle difference α exceeds the predetermined angle, and thus "impossible" indicating that the hull 100a cannot be loaded onto the trailer 200 is displayed in the display area 502 in the screen A3.

The screen A4 shows a state immediately after the timing T2. Since it is determined that the loading is impossible at the timing T2, the estimation of the predicted position, the predicted azimuth, and the predicted trajectory in the forward direction is not performed thereafter. In this case, the vessel steering controller 401 performs control to cause the hull 100a to move rearwards from the actually detected position P2'. In a case where the hull 100a is caused to move rearwards, the notifier 405 notifies of the rearward movement of the hull 100a. As an example of this notification, the notifier 405 displays, in the display area 503, a mark such as "R" indicating that the shift position of the forward-and-rearward switching mechanism 124, which is a shift mechanism, is put in reverse. It is noted that a predicted trajectory 500R when the hull 100a moves rearwards may be predicted and displayed on the screen A4.

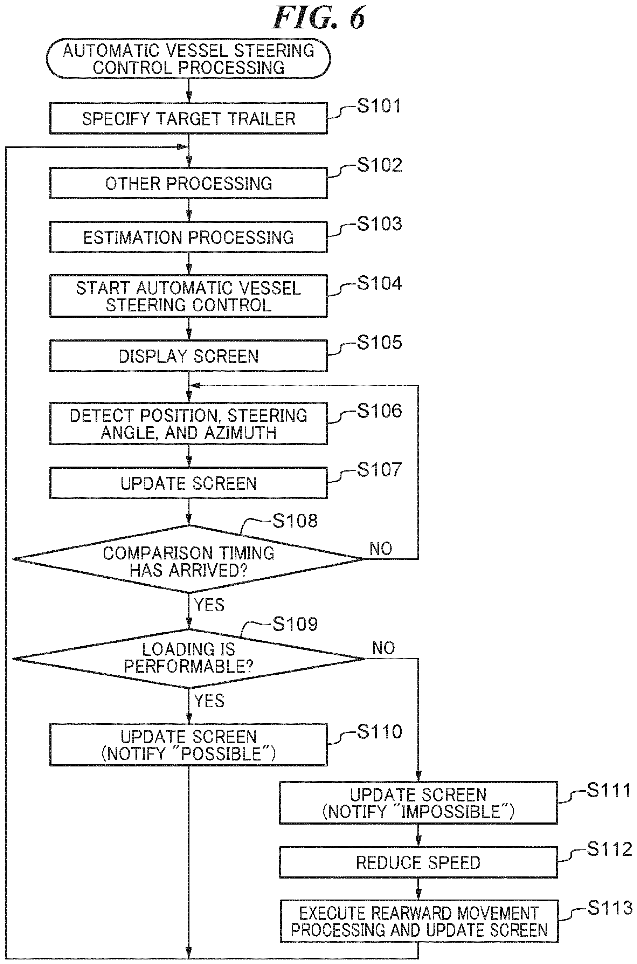

FIG. 6 is a flowchart illustrating automatic vessel steering control processing. This automatic vessel steering control processing is started in response to an instruction to start the automatic trailer mode. This automatic vessel steering control processing is implemented by the CPU 102 loading a control program stored in the ROM 103 to the RAM 104 and executing the program. The automatic vessel steering control processing will be described with reference to FIG. 5 as well.

In step S101, the CPU 102 specifies a target trailer (for example, the trailer 200 in FIG. 5) on which the hull 100a is to be loaded by the above-described method. In step S102, the CPU 102 executes other processing. Here, the CPU 102 can execute, for example, processing to end the automatic vessel steering control processing illustrated in FIG. 6, or the like, in response to an instruction from a user.

In step S103, the CPU 102 executes estimation processing. In this estimation processing, first, the CPU 102 acquires the position, the steering angle, and the azimuth of the hull 100a. The CPU 102 determines the content of the automatic vessel steering control (the control of the steering angle and/or the output of the propulsion device 120, or the like) for moving the hull 100a toward the target trailer 200 based on the acquired position, steering angle, and azimuth of the hull 100a. In addition, the CPU 102 estimates the position (such as the predicted position P1) and the azimuth (the predicted azimuth) of the hull 100a at the comparison timing after the lapse of the predetermined period of time T from the current point of time. Further, the CPU 102 predicts the predicted trajectory 500, which is a predicted future movement trajectory of the hull 100a, starting from the current position, based on the determined content of the automatic vessel steering control.

In step S104, the CPU 102 starts the automatic vessel steering control based on the determined content of the automatic vessel steering control. It is noted that, in order to determine the arrival of the next comparison timing, the CPU 102 starts clocking.

In step S105, the CPU 102 displays a state display screen on the display unit 110. For example, as shown in the screens A1 to A4 in FIG. 5, the position of the target trailer 200, the current position (such as the position P0) of the hull 100a, the predicted position (such as the predicted position P1) of the hull 100a, the predicted trajectory 500, "AUTO" (the display area 501), and the like are displayed.

In step S106, the CPU 102 detects (acquires) the position, the steering angle, and the azimuth, of the hull 100a. In step S107, the CPU 102 updates the display position of the current position of the hull 100a on the state display screen based on the detected position of the hull 100a. In step S108, the CPU 102 determines whether or not the comparison timing has arrived. As described above, in a case where the predetermined period of time T has elapsed since clocking was started in the last step S104, the CPU 102 determines that the comparison timing has arrived. As described above, the movement distance of the hull 100a may be used to determine the arrival of the comparison timing. In this case, the measurement of the movement distance can be started in step S104, and the arrival of the comparison timing can be determined in step S108 based on whether the hull 100a has moved by the first predetermined distance.

In step S108, the CPU 102 returns the processing to step S106 in a case where it is determined that the comparison timing has not arrived, whereas the CPU 102 proceeds the processing to step S109 in a case where it is determined that the comparison timing has arrived.

In step S109, the CPU 102 compares the position (the predicted position) and the azimuth (the predicted azimuth) of the hull 100a, which are estimated in step S103, with the position (the actually detected position) and the azimuth (actually detected azimuth) of the hull 100a, which are detected at the comparison timing this time (that is, which are detected in the last step S106), respectively. Then, the CPU 102 determines whether or not the hull 100a can be loaded onto the trailer 200 based on the comparison result.

Here, as described above, in a case where the distance D, which is the difference between the predicted position and the actually detected position, exceeds the second predetermined distance and/or the angle difference α, which is the difference between the predicted azimuth and the actually detected azimuth, exceeds the predetermined angle, the CPU 102 determines that the hull 100a cannot be loaded onto the trailer 200 (for example, the screen A3 in FIG. 5). In a case where the distance D does not exceed the second predetermined distance and the angle difference α does not exceed the predetermined angle, the CPU 102 determines that the hull 100a can be loaded onto the trailer 200 (for example, the screen A2).

Then, in a case where the CPU 102 determines that the hull 100a can be loaded onto the trailer 200, the processing proceeds to step S110, whereas in a case where the CPU 102 determines that the hull 100a cannot be loaded onto the trailer 200, the processing proceeds to step S111.

In step S110, the CPU 102 updates the state display screen. Namely, the CPU 102 causes the actually detected position of the hull 100a detected in the last step S106 to be displayed (for example, the actually detected position P1' is displayed on the screen A2), and causes "possible" indicating that loading is performable to be displayed in the display area 502. After step S110, the CPU 102 returns the processing to step S102.

As a result, in the next steps S103 to S105 after step S110, the estimation processing is executed, the automatic vessel steering control is executed according to the content of the newly determined automatic vessel steering control, and the screen display is updated. For example, as shown on the screen A3, in the next step S103 after step S110, the predicted position P2 is predicted, and the new predicted trajectory 500 starting from the updated actually detected position (the actually detected position P1') is predicted. Further, in step S105, the predicted position P2 and the predicted trajectory 500 are displayed.

In step S111, the CPU 102 updates the state display screen. Namely, the CPU 102 causes the actually detected position of the hull 100a detected in the last step S106 to be displayed (for example, the actually detected position P2' is displayed on the screen A3), and causes "impossible" indicating that loading is not performable to be displayed in the display area 502.

In step S112, the CPU 102 performs control so as to reduce the speed of the hull 100a, thereby preventing the hull 100a from getting excessively close to the trailer 200. For example, the CPU 102 sets the output of the propulsion device 120 (rpm of the engine 125) to a predetermined value or less. Further, the CPU 102 may set the shift position of the forward-and-rearward switching mechanism 124 to the neutral position. It is noted that the processing in step S112 may include processing of stopping the hull 100a or processing of holding the hull 100a at a fixed point.

In step S113, the CPU 102 executes rearward movement processing of causing the hull 100a to move rearwards, and updates the state display screen. In the rearward movement processing, the CPU 102 determines at least one of the steering angle and the output of the propulsion device 120, as the content of the automatic vessel steering control for rearward movement. Then, the CPU 102 switches the shift position to the rearward movement, and starts the vessel steering control according to the content of the automatic vessel steering control for rearward movement. It is noted that in the rearward movement processing, the hull 100a may move rearwards by a certain distance or for a certain period of time.

When determining and controlling the steering angle for causing the hull 100a to move rearwards, the CPU 102 causes the hull 100a to move rearwards by setting the steering angle (the steering direction) to the steering angle (a direction) (referred to as "reverse steering" in this case), which is opposite to the previous steering angle (the steering direction) for forward movement. In this way, when the hull 100a cannot be loaded onto the trailer 200 due to disturbance such as cross wind, the hull 100a can move rearwards along a trajectory close to the movement trajectory at the time of forward movement of the hull 100a.

In a case where such reverse steering is adopted, the CPU 102 stores the steering angle at the time of forward movement of the hull 100a in the memory 111 as needed, and uses the last stored steering angle as the immediately preceding steering angle at the time of forward movement of the hull 100a. It is noted that, in a case where the reverse steering is adopted, the CPU 102 may determine the steering angle at the time of rearward movement of the hull 100a based on the stored steering angle at the time of the forward movement and the output of the propulsion device 120 determined for the rearward movement. In this case, for example, the CPU 102 may set the steering angle at the time of the rearward movement to be smaller as the output at the time of rearward movement is larger. Alternatively, from the viewpoint of reducing a processing load, the steering angle for the rearward movement may be set to a steering angle having the same value as and in a direction opposite to the stored steering angle, without performing calculation or the like.

In the update of the state display screen in step S113, as exemplified in the screen A4, the CPU 102 displays, in the display area 503, a mark such as "R" indicating that the shift position is put in reverse. Further, the CPU 102 may predict the predicted trajectory 500R when the hull 100a moves rearwards, which is a predicted future movement trajectory of the hull 100a starting from the current position, based on the content of the automatic vessel steering control for rearward movement, and may display the predicted predicted trajectory 500R on the screen.

After step S113, the CPU 102 returns the processing to step S102. In the subsequent processing after step S102, the forward movement in the automatic trailer mode may be resumed. Alternatively, the automatic trailer mode may be interrupted in step S113, and the automatic trailer mode may be resumed by a restart instruction from a user in other processing in next step S102.

According to the present preferred embodiment, the position and the azimuth of the hull 100a at the comparison timing are estimated based on the determined content of the automatic vessel steering control. Then, it is determined whether or not the hull 100a can be loaded onto the trailer 200, based on the comparison result between the estimated position and azimuth and the position and azimuth detected at the comparison timing, respectively. In a case where it is determined that the hull 100a cannot be loaded onto the trailer 200, this matter is notified. As a result, even when the hull 100a does not move as predicted by the control due to disturbance such as wind, tidal current or waves, the vessel operator can recognize that situation before it becomes difficult to load the hull 100a onto the trailer 200. Therefore, the loading of the hull 100a onto the trailer 200 can be facilitated.

In addition, in a case where it is determined that the hull 100a can be loaded onto the trailer 200, this matter is notified by displaying the indication of "possible", and in a case where it is determined that the hull 100a cannot be loaded onto the trailer 200, this matter is notified by displaying the indication of "impossible". As a result, the vessel operator can recognize whether or not the hull 100a can be loaded onto the trailer 200, by viewing the displayed indication.

In addition, in a case where the distance D, which is the difference between the predicted position and the actually detected position, exceeds the second predetermined distance and/or the angle difference α, which is the difference between the predicted azimuth and the actually detected azimuth, exceeds the predetermined angle, it is determined that the hull 100a cannot be loaded onto the trailer 200. As a result, the automatic vessel steering control is prevented from being continuously performed with a large deviation from the prediction in terms of the distance or the movement direction.

In addition, since the comparison timing repeatedly arrives after the start of the automatic vessel steering control, it is possible to periodically notify the vessel operator of whether or not the hull 100a can be loaded onto the trailer 200, while causing the hull 100a to move toward the trailer 200.

In addition, in a case where it is determined that the hull 100a cannot be loaded onto the trailer 200, the hull 100a is caused to reduce the speed thereof or the hull 100a is caused to move rearwards, thereby making it possible to prevent the hull 100a from getting excessively close to the trailer 200. It is noted that, it is not essential to temporarily reduce the speed of the hull 100a in a case where it is determined that the hull 100a cannot be loaded onto the trailer 200, , and the processing may immediately proceed to the rearward movement processing (S113).

In addition, the steering angle at a time when it is determined that the hull 100a cannot be loaded onto the trailer 200 is stored, and the steering angle at the time when the hull 100a is caused to move rearwards is set in a direction opposite to the stored steering angle. Accordingly, when the hull 100a cannot be loaded onto the trailer 200 due to disturbance such as crosswind, the hull 100a can move rearwards along a trajectory close to the movement trajectory at the time of forward movement of the hull 100a. In particular, by determining the steering angle at the time when the hull 100a is caused to move rearwards based on the stored steering angle and the output of the propulsion device 120 for causing the hull 100a to move rearwards, it is possible to cause the hull 100a to move rearwards along the trajectory closer to the movement trajectory at the time of forward movement of the hull 100a, in consideration of the output of the propulsion device 120. It is noted that, in a case where the steering angle at the time when the hull 100a is caused to move rearwards is set to a steering angle in the direction opposite to the stored steering angle and having the same magnitude as the stored steering angle, a processing load such as calculation of the steering angle can be reduced.

In addition, when the automatic vessel steering control for causing the hull 100a to move rearwards is executed, the mark such as "R" is displayed to notify the vessel operator of the effect that the automatic vessel steering control is to be executed, thereby making it possible to alert the vessel operator that the vessel is moving rearwards.

In addition, when the automatic vessel steering control is being executed, "AUTO" is displayed to notify the vessel operator of the effect that the automatic vessel steering control is being executed, so that the vessel operator can visually recognize that the manual vessel steering is invalid.

It is noted that the indication modes such as "possible", "impossible", "R", "AUTO", the predicted trajectory 500 and 500R are examples, and the display modes are not limited thereto. In particular, the indications indicating a situation is not limited to "possible", "impossible", "R", and "AUTO", and each situation may be notified by displaying a message or the like. Further, instead of these displays or in addition thereto, each situation may be notified by audio.

The present invention can also be realized by processing in which a program for implementing one or more functions of the above-described preferred embodiments is supplied to a system or a device via a network or a non-transitory storage medium, and one or more processors of a computer of the system or the device reads and executes the program. The above program and the storage medium storing the above program constitute the present invention. Further, the present invention can also be implemented by a circuit (for example, ASIC) that implements one or more functions.

It is noted that the present invention is not limited to being applied to the jet boat, and can also be applied to various marine vessels propelled by an outboard motor, an inboard motor, or an inboard/outboard motor.

While preferred embodiments of the present invention have been described above, it is to be understood that variations and modifications will be apparent to those skilled in the art without departing from the scope as defined by the appended claims. The scope of the present invention, therefore, is to be determined solely by the following claims.

## Claims

1. A trailering support device that performs trailering for loading a hull (100a) onto a trailer (200), the trailering support device comprising
one or more controllers configured to function as:
a vessel steering controller (401) configured to perform automatic vessel steering control so as to move the hull (100a) toward the trailer (200);
an estimation unit (402) configured to estimate, based on a content of the automatic vessel steering control, a position of the hull (100a) at a predetermined timing after start of the automatic vessel steering control and an azimuth of the hull (100a) at the predetermined timing;
a detector (403) configured to detect the position of the hull (100a), a steering angle of the hull (100a), and the azimuth of the hull (100a);
**characterised in that** the trailering support device further comprises
a determination unit (404) configured to respectively compare the position and the azimuth which are estimated by the estimation unit (402) with the position and the azimuth which are detected by the detector (403) at the predetermined timing, and to determine, based on a comparison result, whether the loading of the hull (100a) onto the trailer (200) is performable or not performable; and
a notifier (405) configured to notify, in a case where the determination unit (404) determines that the loading of the hull (100a) onto the trailer (200) is not performable, of an effect that the loading of the hull (100a) onto the trailer (200) is not performable.

2. The trailering support device according to claim 1, wherein the determination unit (404) determines that the loading of the hull (100a) onto the trailer (200) is not performable in a case where a difference between the estimated position and the detected position exceeds a predetermined distance and/or a difference between the estimated azimuth and the detected azimuth exceeds a predetermined angle.

3. The trailering support device according to claim 1, wherein the predetermined timing repeatedly arrives after the start of the automatic vessel steering control.

4. The trailering support device according to claim 3, wherein the predetermined timing is a timing at which the hull (100a) moves by a predetermined distance or a predetermined period of time elapses, after the last time the estimation unit (402) estimates the position and the azimuth of the hull (100a).

5. The trailering support device according to claim 1, wherein the content of the automatic vessel steering control includes at least one of control of the steering angle of the hull (100a) and control of an output of a propulsion device (120) that propels the hull (100a).

6. The trailering support device according to claim 1, wherein the vessel steering controller (401) reduces a speed of the hull (100a) in a case where it is determined that the loading of the hull (100a) onto the trailer (200) is not performable.

7. The trailering support device according to claim 1, wherein the vessel steering controller (401) causes the hull (100a) to move rearwards in a case where it is determined that the loading of the hull (100a) onto the trailer (200) is not performable.

8. The trailering support device according to claim 7, wherein the vessel steering controller (401) is configured to store the steering angle at a time when it is determined that the loading of the hull (100a) onto the trailer (200) is not performable, and to set the steering angle for the hull (100a) being moved rearwards to a steering angle in a direction opposite to the stored steering angle.

9. The trailering support device according to claim 8, wherein the vessel steering controller (401) is configured to determine the steering angle for the hull (100a) being moved rearwards based on the stored steering angle and an output of a propulsion device (120) that propels the hull (100a) being moved rearwards.

10. The trailering support device according to claim 8, wherein the vessel steering controller (401) sets the steering angle for the hull (100a) being moved rearwards to a steering angle in the direction opposite to the stored steering angle and having the same magnitude as the stored steering angle.

11. The trailering support device according to claim 7, wherein the notifier (405) further notifies, when the hull (100a) is caused to move rearwards, of an effect that the hull (100a) is caused to move rearwards.

12. The trailering support device according to claim 1, wherein the notifier (405) further notifies, when it is determined that the loading of the hull (100a) is performable, of an effect that the loading of the hull (100a) is performable.

13. The trailering support device according to claim 1, wherein the notifier (405) further notifies, when the automatic vessel steering control is being executed, of an effect that the automatic vessel steering control is being executed.

14. A marine vessel comprising the trailering support device according to any one of claims 1 to 13.

15. A trailering support method of performing trailering for loading a hull (100a) onto a trailer, the trailering support method comprising:
performing automatic vessel steering control so as to move the hull (100a) toward the trailer (200);
estimating (S103), based on a content of the automatic vessel steering control, a position of the hull (100a) at a predetermined timing after start of the automatic vessel steering control and an azimuth of the hull (100a) at the predetermined timing;
detecting (S106) the position of the hull (100a), a steering angle of the hull (100a), and the azimuth of the hull (100a);
respectively comparing the position and the azimuth which are estimated with the position and the azimuth which are detected at the predetermined timing, and determining (S109), based on a comparison result, whether the loading of the hull (100a) onto the trailer (200) is performable or not performable; and
notifying (S111), in a case where it is determined that the loading of the hull (100a) onto the trailer (200) is not performable, of an effect that the loading of the hull (100a) onto the trailer (200) is not performable.

## Patentansprüche

1. Anhängerunterstützungsvorrichtung, die das Anhängen zum Aufladen eines Schiffskörpers (100a) auf einen Anhänger (200) durchführt, wobei die Anhängerunterstützungsvorrichtung
eine oder mehrere Steuereinrichtungen umfasst, welche so konfiguriert sind, dass sie als
Steuergerät für die Schiffslenkung (401), das so konfiguriert ist, dass es eine automatische Schiffslenksteuerung durchführt, um den Schiffskörper (100a) in Richtung des Anhängers (200) zu bewegen,
Abschätzungseinheit (402), die so konfiguriert ist, dass sie auf der Grundlage eines Inhalts der automatischen Schiffslenksteuerung eine Position des Schiffskörpers (100a) zu einem vorbestimmten Zeitpunkt nach dem Start der automatischen Schiffslenksteuerung und einen Richtungswinkel des Schiffskörpers (100a) zu dem vorbestimmten Zeitpunkt vorkalkuliert,
Detektor (403), der so konfiguriert ist, dass er die Position des Schiffskörpers (100a), einen Steuerwinkel des Schiffskörpers (100a) und den Richtungswinkel des Schiffskörpers (100a) erfasst,
fungieren,
**dadurch gekennzeichnet, dass** die Anhängerunterstützungsvorrichtung ferner umfasst:
eine Bestimmungseinheit (404), die so konfiguriert ist, dass sie jeweils die Position und den Richtungswinkel, die von der Abschätzungseinheit (402) vorkalkuliert werden, mit der Position und dem Richtungswinkel, die von dem Detektor (403) zu dem vorbestimmten Zeitpunkt erfasst werden, vergleicht und basierend auf einem Vergleichsergebnis bestimmt, ob das Aufladen des Schiffskörpers (100a) auf den Anhänger (200) durchführbar oder nicht durchführbar ist, und
eine Meldeeinrichtung (405), die so konfiguriert ist, dass sie in einem Fall, in dem die Bestimmungseinheit (404) bestimmt, dass das Aufladen des Schiffskörpers (100a) auf den Anhänger (200) nicht durchführbar ist, ein Ergebnis meldet, dass das Aufladen des Schiffskörpers (100a) auf den Anhänger (200) nicht durchführbar ist.

2. Anhängerunterstützungsvorrichtung gemäß Anspruch 1, wobei die Bestimmungseinheit (404) in einem Fall, in dem eine Differenz zwischen der vorkalkulierten Position und der erfassten Position einen vorbestimmten Abstand überschreitet und/oder eine Differenz zwischen dem vorkalkulierten Richtungswinkel und dem erfassten Richtungswinkel einen vorbestimmten Winkel überschreitet, bestimmt, dass das Aufladen des Schiffskörpers (100a) auf den Anhänger (200) nicht durchführbar ist.

3. Anhängerunterstützungsvorrichtung gemäß Anspruch 1, wobei der vorbestimmte Zeitpunkt wiederholt nach dem Start der automatischen Schiffslenksteuerung eintritt.

4. Anhängerunterstützungsvorrichtung gemäß Anspruch 3, wobei der vorbestimmte Zeitpunkt ein Zeitpunkt ist, zu dem sich der Schiffskörper (100a) um eine vorbestimmte Strecke bewegt oder eine vorbestimmte Zeitspanne verstrichen ist, nachdem die Abschätzungseinheit (402) das letzte Mal die Position und den Richtungswinkel des Schiffskörpers (100a) vorkalkuliert hat.

5. Anhängerunterstützungsvorrichtung gemäß Anspruch 1, wobei der Inhalt der automatischen Schiffslenksteuerung mindestens eine einer Steuerung des Lenkwinkels des Schiffskörpers (100a) und einer Steuerung einer Leistung einer Antriebsvorrichtung (120), die den Schiffskörper (100a) antreibt, umfasst.

6. Anhängerunterstützungsvorrichtung gemäß Anspruch 1, wobei das Steuergerät für die Schiffslenkung (401) die Geschwindigkeit des Schiffskörpers (100a) in einem Fall, in dem festgestellt wird, dass das Verladen des Schiffskörpers (100a) auf den Anhänger (200) nicht durchführbar ist, reduziert.

7. Anhängerunterstützungsvorrichtung gemäß Anspruch 1, wobei das Steuergerät für die Schiffslenkung (401) in einem Fall, in dem festgestellt wird, dass das Verladen des Schiffskörpers (100a) auf den Anhänger (200) nicht durchführbar ist, bewirkt, dass sich der Schiffskörper (100a) nach hinten bewegt.

8. Anhängerunterstützungsvorrichtung gemäß Anspruch 7, wobei das Steuergerät für die Schiffslenkung (401) so konfiguriert ist, dass es den Lenkwinkel zu einem Zeitpunkt speichert, zu dem festgestellt wird, dass das Aufladen des Schiffskörpers (100a) auf den Anhänger (200) nicht durchführbar ist, und den Lenkwinkel für den Schiffskörper (100a), der nach hinten bewegt wird, auf einen Lenkwinkel in einer zum gespeicherten Lenkwinkel entgegengesetzten Richtung einstellt.

9. Anhängerunterstützungsvorrichtung gemäß Anspruch 8, wobei das Steuergerät für die Schiffslenkung (401) so konfiguriert ist, dass es den Lenkwinkel für den Schiffskörper (100a), der nach hinten bewegt wird, auf der Grundlage des gespeicherten Lenkwinkels und einer Leistung einer Antriebsvorrichtung (120), die den Schiffskörper (100a), der nach hinten bewegt wird, antreibt, bestimmt.

10. Anhängerunterstützungsvorrichtung gemäß Anspruch 8, wobei das Steuergerät für die Schiffslenkung (401) den Lenkwinkel für den Schiffskörper (100a), der nach hinten bewegt wird, auf einen Lenkwinkel in einer zum gespeicherten Lenkwinkel entgegengesetzten Richtung und mit der gleichen Größenordnung wie der gespeicherte Lenkwinkel einstellt.

11. Anhängerunterstützungsvorrichtung gemäß Anspruch 7, wobei die Meldeeinrichtung (405), wenn der Schiffskörper (100a) dazu veranlasst wird, sich rückwärts zu bewegen, außerdem ein Ergebnis meldet, dass der Schiffskörper (100a) dazu veranlasst wird, sich rückwärts zu bewegen.

12. Anhängerunterstützungsvorrichtung gemäß Anspruch 1, wobei die Meldeeinrichtung (405), wenn festgestellt wird, dass das Beladen des Schiffskörpers (100a) durchführbar ist, ferner ein Ergebnis meldet, dass das Aufladen des Schiffskörpers (100a) durchführbar ist.

13. Anhängerunterstützungsvorrichtung gemäß Anspruch 1, wobei die Meldeeinrichtung (405), wenn die automatische Schiffslenksteuerung ausgeführt wird, ferner ein Ergebnis meldet, dass die automatische Schiffslenksteuerung ausgeführt wird.

14. Wasserfahrzeug, das die Anhängerunterstützungsvorrichtung gemäß einem der Ansprüche 1 bis 13 umfasst.

15. Verfahren zur Unterstützung des Anhängens zum Durchführen des Anhängens zum Aufladen eines Schiffskörpers (100a) auf einen Anhänger, wobei das Verfahren zur Unterstützung des Anhängens umfasst:
Durchführen einer automatischen Schiffslenksteuerung, um den Schiffskörper (100a) in Richtung des Anhängers (200) zu bewegen,
Vorkalkulieren (S103), basierend auf einem Inhalt der automatischen Schiffslenksteuerung, einer Position des Schiffskörpers (100a) zu einem vorbestimmten Zeitpunkt nach dem Start der automatischen Schiffslenksteuerung und eines Richtungswinkels des Schiffskörpers (100a) zu dem vorbestimmten Zeitpunkt,
Erfassen (S106) der Position des Schiffskörpers (100a), eines Steuerwinkels des Schiffskörpers (100a) und des Richtungswinkels des Schiffskörpers (100a),
jeweils Vergleichen der Position und des Richtungswinkels, die vorkalkuliert werden, mit der Position und dem Richtungswinkel, die zu dem vorbestimmten Zeitpunkt erfasst werden, und Bestimmen (S109), basierend auf einem Vergleichsergebnis, ob das Aufladen des Schiffskörpers (100a) auf den Anhänger (200) durchführbar oder nicht durchführbar ist, und
in einem Fall, in dem festgestellt wird, dass das Aufladen des Schiffskörpers (100a) auf den Anhänger (200) nicht durchführbar ist, Melden (S111) eines Ergebnisses, dass das Aufladen des Schiffskörpers (100a) auf den Anhänger (200) nicht durchführbar ist.

## Revendications

1. Dispositif de support de remorquage qui effectue le remorquage pour charger une coque (100a) sur une remorque (200), le dispositif de support de remorquage comprenant
un ou plusieurs contrôleurs configurés pour fonctionner comme :
un contrôleur de direction de navire (401) configuré pour effectuer une commande automatique de direction de navire de manière à déplacer la coque (100a) vers la remorque (200) ;
une unité d'estimation (402) configurée pour estimer, sur la base d'un contenu de la commande automatique de direction de navire, une position de la coque (100a) à un moment prédéterminé après le début de la commande automatique de direction de navire et un azimut de la coque (100a) au moment prédéterminé ;
un détecteur (403) configuré pour détecter la position de la coque (100a), un angle de direction de la coque (100a) et l'azimut de la coque (100a) ;
**caractérisé en ce que** le dispositif de support de remorquage comprend en outre une unité de détermination (404) configurée pour comparer respectivement la position et l'azimut qui sont estimés par l'unité d'estimation (402) avec la position et l'azimut qui sont détectés par le détecteur (403) au moment prédéterminé, et pour déterminer, sur la base d'un résultat de comparaison, si le chargement de la coque (100a) sur la remorque (200) est réalisable ou non réalisable ; et
un notificateur (405) configuré pour notifier, dans un cas où l'unité de détermination (404) détermine que le chargement de la coque (100a) sur la remorque (200) n'est pas réalisable, d'un effet que le chargement de la coque (100a) sur la remorque (200) n'est pas réalisable.

2. Dispositif de support de remorquage selon la revendication 1, dans lequel l'unité de détermination (404) détermine que le chargement de la coque (100a) sur la remorque (200) n'est pas réalisable dans un cas où une différence entre la position estimée et la position détectée dépasse une distance prédéterminée et/ou une différence entre l'azimut estimé et l'azimut détecté dépasse un angle prédéterminé.

3. Dispositif de support de remorquage selon la revendication 1, dans lequel le moment prédéterminé arrive de manière répétée après le début de la commande automatique de direction de navire.

4. Dispositif de support de remorquage selon la revendication 3, dans lequel le moment prédéterminé est un moment où la coque (100a) se déplace d'une distance prédéterminée ou une période de temps prédéterminée s'écoule, après la dernière fois que l'unité d'estimation (402) estime la position et l'azimut de la coque (100a).

5. Dispositif de support de remorquage selon la revendication 1, dans lequel le contenu de la commande automatique de direction de navire inclut au moins l'un parmi la commande de l'angle de direction de la coque (100a) et la commande d'une sortie d'un dispositif de propulsion (120) qui propulse la coque (100a).

6. Dispositif de support de remorquage selon la revendication 1, dans lequel le contrôleur de direction de navire (401) réduit une vitesse de la coque (100a) dans un cas où il est déterminé que le chargement de la coque (100a) sur la remorque (200) n'est pas réalisable.

7. Dispositif de support de remorquage selon la revendication 1, dans lequel le contrôleur de direction de navire (401) provoque le déplacement de la coque (100a) vers l'arrière dans un cas où il est déterminé que le chargement de la coque (100a) sur la remorque (200) n'est pas réalisable.

8. Dispositif de support de remorquage selon la revendication 7, dans lequel le contrôleur de direction de navire (401) est configuré pour mémoriser l'angle de direction à un moment où il est déterminé que le chargement de la coque (100a) sur la remorque (200) n'est pas réalisable, et pour régler l'angle de direction pour la coque (100a) se déplaçant vers l'arrière à un angle de direction dans une direction opposée à l'angle de direction mémorisé.

9. Dispositif de support de remorquage selon la revendication 8, dans lequel le contrôleur de direction de navire (401) est configuré pour déterminer l'angle de direction pour la coque (100a) déplacée vers l'arrière selon l'angle de direction mémorisé et une sortie d'un dispositif de propulsion (120) qui propulse la coque (100a) déplacée vers l'arrière.

10. Dispositif de support de remorquage selon la revendication 8, dans lequel le contrôleur de direction de navire (401) définit l'angle de direction pour la coque (100a) déplacée vers l'arrière à un angle de direction dans la direction opposée à l'angle de direction mémorisé et ayant la même magnitude que l'angle de direction mémorisé.

11. Dispositif de support de remorquage selon la revendication 7, dans lequel le notificateur (405) notifie en outre, lorsque la coque (100a) est amenée à se déplacer vers l'arrière, d'un effet que la coque (100a) est amenée à se déplacer vers l'arrière.

12. Dispositif de support de remorquage selon la revendication 1, dans lequel le notificateur (405) notifie en outre, lorsqu'il est déterminé que le chargement de la coque (100a) est réalisable, d'un effet que le chargement de la coque (100a) est réalisable.

13. Dispositif de support de remorquage selon la revendication 1, dans lequel le notificateur (405) notifie en outre, lorsque la commande automatique de direction de navire est en cours d'exécution, un effet selon lequel la commande automatique de direction de navire est en cours d'exécution.

14. Navire comprenant le dispositif de support de remorquage selon l'une quelconque des revendications 1 à 13.

15. Procédé de support de remorquage permettant d'effectuer un remorquage pour charger une coque (100a) sur une remorque, le procédé de support de remorquage comprenant :
la réalisation d'une commande automatique de direction de navire de manière à déplacer la coque (100a) vers la remorque (200) ;
l'estimation (S103), sur la base d'un contenu de la commande automatique de direction de navire, d'une position de la coque (100a) à un moment prédéterminé après le début de la commande automatique de direction de navire et un azimut de la coque (100a) au moment prédéterminé ;
la détection (S106) de la position de la coque (100a), d'un angle de direction de la coque (100a) et de l'azimut de la coque (100a) ;
la comparaison respectivement de la position et de l'azimut estimés avec la position et l'azimut détectés au moment prédéterminé, et la détermination (S109), sur la base d'un résultat de comparaison, du fait que le chargement de la coque (100a) sur la remorque (200) est réalisable ou non réalisable ; et
la notification (S111), dans un cas où il est déterminé que le chargement de la coque (100a) sur la remorque (200) n'est pas réalisable, d'un effet que le chargement de la coque (100a) sur la remorque (200) n'est pas réalisable.
